# EUROPEAN PATENT APPLICATION

(11) **EP 4 670 944 A1**
(43) Date of publication of application: **31.12.2025**
(21) Application number: 25184628.3
(22) Date of filing: 23.06.2025
(51) Int. Cl.: B29C 35/00, C08L 27/16, F16J 15/10

(54) **REFRIGERANT SEAL AND MANUFACTURING METHOD THEREOF, THERMAL MANAGEMENT ASSEMBLY AND THERMAL MANAGEMENT SYSTEM**

(30) Priority: 26.06.2024 CN 202410841443
(71) Applicant: Xi'an Aerospace Propulsion Institute, Shaanxi 710100 (CN); Zhejiang Sanhua Intelligent Controls Co.,Ltd, Shaoxing, Zhejiang 312000 (CN); Northwestern Polytechnical University, Xian, Shanxi 710072 (CN)
(72) Inventor: Xiaopeng, Li, Xi'an (CN); Shengjia, Zhang, Shaoxing, 312000 (CN); Hongchun, Li, Xi'an (CN); Kezhe, Qian, Shaoxing, 312000 (CN); Liyi, Xue, Xi'an (CN); Xuetao, Shi, Xi'an (CN)
(74) Representative: Luppi Intellectual Property S.r.l.

(57) **Abstract**

Provided is a refrigerant seal including a rubber compound having an -OCF₃ bond and a rubber compound having a -CH₂CH(CN)- bond. A weight ratio of the rubber compound having the -OCF₃ bond to the rubber compound having the -CH₂CH(CN)- bond is from 1:1 to 9:1. Further, provided is a manufacturing method for a refrigerant seal including providing an uncured rubber compound having an -OCF₃ bond and an uncured rubber compound having a -CH₂CH(CN)- bond; mixing the uncured rubber compound having the -OCF₃ bond and the uncured rubber compound having the -CH₂CH(CN)- bond in a machine and then vulcanizing to form the refrigerant seal. Furthermore, provided are a thermal management assembly and a thermal management system. The rubber compound having the -OCF3 bond and the rubber compound having the -CH2CH(CN)- bond are formulated, both of which are polar rubber compounds, and have good synergistic effects.

## Description

### CROSS-REFERENCE TO RELATED APPLICATIONS

The present application claims priority to Chinese patent application No. 202410841443.7, filed on June 26, 2024, which is hereby incorporated by reference in its entirety.

### TECHNICAL FIELD

The present disclosure relates to the technical field of manufacturing polymer elastomer composite materials for thermal management systems and, in particular, to a refrigerant seal and a manufacturing method thereof, a thermal management assembly and a thermal management system.

### BACKGROUND

Since refrigerant is important medium in the technical field of thermal management systems for automobiles and households, the requirements for refrigerant leakage in thermal management systems are extremely strict. Since the seals in the thermal management system are in long-term contact with the refrigerant, the refrigerant is prone to leaking from the seal body, which can affect the normal operation of the thermal management system. Therefore, refrigerant sealing is the key technology to be tackled in this field. In related technologies, the sealing performance of seals in thermal management assemblies is poor for refrigerants (such as R744).

### SUMMARY

The purpose of the present disclosure is to provide a refrigerant seal, including a rubber compound having an -OCF₃ bond and a rubber compound having a -CH₂CH(CN)-bond; a weight ratio of the rubber compound having the -OCF₃ bond to the rubber compound having the -CH₂CH(CN)- bond ranges from 1:1 to 9:1.

In an embodiment of the present disclosure, the refrigerant seal includes a rubber compound having a -OCF₃ bond and a rubber compound having a -CH₂CH(CN)- bond. The rubber compound having the -OCF₃ bond and the rubber compound having the - CH₂CH(CN)- bond are formulated in a specific weight ratio, both of which are polar rubber compounds, and have good synergistic effects, such that the refrigerant seal has good sealing performance.

A further embodiment of the present disclosure provides a method for manufacturing a refrigerant seal, including: providing an uncured rubber compound having an -OCF₃ bond and an uncured rubber compound having a -CH₂CH(CN)- bond; and mixing the uncured rubber compound having the -OCF₃ bond and the uncured rubber compound having the -CH₂CH(CN)- bond in a machine, and vulcanizing. The weight ratio of the rubber compound having the -OCF₃ bond to the rubber compound having the -CH₂CH(CN)-bond ranges from 1:1 to 9:1.

In an embodiment of the present disclosure, the rubber compound having the - OCF₃ bond and the rubber compound having the -CH₂CH(CN)- bond are formulated in a specific weight ratio, both of which are polar rubber compounds, and have good synergistic effects, and the refrigerant seal formed by the two after mixing and vulcanization has good sealing performance for refrigerants.

A further embodiment of the present disclosure provides a thermal management assembly, including a functional device, a connector and a first seal, the functional device is sealingly connected to the first seal, and the connector is sealingly connected to the first seal; the functional device includes at least one of a heat exchange device, a compressor and a throttling device.

The thermal management assembly can be configured to circulate a refrigerant, the first seal includes a rubber compound having an -OCF₃ bond and a rubber compound having a -CH₂CH(CN)- bond, and a weight ratio of the rubber compound having the -OCF₃ bond to the rubber compound having the -CH₂CH(CN)-bond ranges from 1:1 to 9:1.

Alternatively, a further embodiment of the present disclosure provides a thermal management assembly. The thermal management assembly includes a first functional part, a second functional part and a second seal, the first functional part is sealingly connected to the second seal, and the second functional part is sealingly connected to the second seal.

The thermal management assembly can be configured to circulate a refrigerant, the second seal include a rubber compound having an -OCF₃ bond and a rubber compound having a -CH₂CH(CN)- bond, and a weight ratio of the rubber compound having the -OCF₃ bond to the rubber compound having the -CH₂CH(CN)-bond ranges from 1:1 to 9:1.

In an embodiment of the present disclosure, in the thermal management assembly, the functional device and the connector are sealingly connected to the first seal, respectively. Alternatively, in a further embodiment of the present disclosur the first functional part and the second functional part are sealingly connected to the second seal, respectively. In an embodiment, the first seal includes the rubber compound having the - OCF₃ bond and the rubber compound having the -CH₂CH(CN)- bond. In another embodiment, the second seal includes the rubber compound having the -OCF₃ bond and the rubber compound having the -CH₂CH(CN)- bond. The rubber compound having the -OCF₃ bond and the rubber compound having the -CH₂CH(CN)- bond are formulated in a specific weight ratio, both of which are polar rubber compounds, and have good synergistic effects, such that the seal of the thermal management assembly has good sealing performance for refrigerants.

A further embodiment of the present disclosure provides a thermal management system, including a compressor, a heat exchange device and a throttling device. The thermal management system has a refrigerant flow path. The compressor, the heat exchange device and the throttling device are provided in the refrigerant flow path. The refrigerant flow path is configured to circulate a refrigerant.

The thermal management system further includes a connector and a seal; at least one of the compressor, the heat exchange device and the throttling device is sealingly connected to the seal, and the connector is sealingly connected to the seal.

The seal includes a rubber compound having an -OCF₃ bond and a rubber compound having a -CH₂CH(CN)- bond, and a weight ratio of the rubber compound having the -OCF₃ bond to the rubber compound having the -CH₂CH(CN)-bond ranges from 1:1 to 9:1.

In an embodiment of the present disclosure, at least one of the compressor, the heat exchange device and the throttling device of the thermal management system is sealingly connected to the seal, the connector is sealingly connected to the seal, and the seal includes the rubber compound having the -OCF₃ bond and the rubber compound having the -CH₂CH(CN)- bond. The rubber compound having the -OCF₃ bond and the rubber compound having the -CH₂CH(CN)- bond are formulated in a specific weight ratio, both of which are polar rubber compounds, and have good synergistic effects, such that the seal of the thermal management system has good sealing performance for refrigerants.

### BRIEF DESCRIPTION OF DRAWINGS

FIG. 1 is a structural schematic diagram of a thermal management assembly according to an embodiment;
FIG. 2 is an enlarged view of A in FIG. 1;
FIG. 3 is a schematic system diagram of a thermal management system according to an embodiment; and
FIG. 4 is a surface optical photograph of a refrigerant seal according to Embodiment 1.

### DESCRIPTION OF EMBODIMENTS

To clarify the purpose, technical solution and advantages of the present disclosure, the technical solution of the present disclosure will be clearly and completely described below in conjunction with embodiments of the present disclosure. It is apparent that the described embodiments are a part of the embodiment of the present disclosure, rather than all. Based on the technical solution and the embodiments provided in the present disclosure, all other technical solutions obtained by those skilled in the art without creative efforts fall within the protection scope of the present disclosure. The embodiments without specific conditions shall be carried out under conventional conditions or conditions recommended by the manufacturer. The reagents or instruments used in the present disclosure without specifying the manufacture are conventional products that can be purchased commercially.

The endpoints of the ranges and any values disclosed by the present disclosure are not limited to the precise ranges or values, and these ranges or values should be understood to include values close to these ranges or values. For numerical ranges, the endpoint values of each range, the endpoint values of each range or the individual point values, and the individual point values can be combined with each other to obtain one or more new numerical ranges.

In some embodiments of thermal management systems, the thermal management system includes a compressor, a first heat exchanger, a throttling device and a second heat exchanger. In some embodiments of thermal management systems, there may be only one unidirectional operation mode, such as refrigerating mode. The first heat exchanger is a condenser, the second heat exchanger is an evaporator, the compressor is connected to the first heat exchanger, the first heat exchanger is connected to the throttling device, and the second heat exchanger is connected to the throttling device and the compressor. The compressor compresses the gaseous refrigerant, so that the refrigerant becomes a high-temperature and high-pressure gas, and then, is sent to the first heat exchanger for cooling. After cooling, the refrigerant becomes a medium-temperature and high-pressure liquid refrigerant. Then, the medium-temperature liquid refrigerant is throttled and depressurized by the throttling device to form a low-temperature and low-pressure gas-liquid mixture. After that, the mixture absorbs heat from the air in the second heat exchanger, and then, is vaporized into a gas. Finally, the gas returns to the compressor for recompression, thereby continuously circulating to perform refrigeration. In some embodiments of thermal management systems, there may be two modes, such as refrigerating mode and heating mode. In heating mode, there may be a reversing device in the thermal management system to ensure that the refrigerant flows in the condenser and evaporator in a direction opposite to that in the refrigerating mode. Therefore, in heating mode, the outdoor unit blows cold air and the indoor unit blows hot air. In this case, the first heat exchanger is the evaporator and the second heat exchanger is the condenser. The compressor compresses the gaseous refrigerant, so that the refrigerant becomes a high-temperature and high-pressure gas, and then, is sent to the second heat exchanger for cooling through the reversing device. After cooling, the gas becomes a medium-temperature and high-pressure liquid refrigerant. Then, the medium-temperature liquid refrigerant is throttled and depressurized by the throttling device 3 to form a low-temperature and low-pressure gas-liquid mixture. After that, the mixture absorbs heat from the air in the first heat exchanger, and then, is vaporizes into a gas. Finally, the gas returns to the compressor for recompression, thereby continuously circulating to perform heating. In some heat pipe assemblies, at least one of the compressor, the first heat exchanger, the second heat exchanger and the throttle valve may include a seal or may be connected to a seal, which is configured to seal the refrigerant and reduce the leakage of the refrigerant. The exhaust temperature of the thermal management system during the cyclic operation may be at most 150 °C and at least -30 °C, and the range of exhaust pressure is 1.3 to 34 MPa. Therefore, in the thermal management system, it is necessary for the seal to have good low-temperature and high-temperature resistance at the same time, and for the refrigerant to have an extremely low leakage rate. In the related art, low-temperature-resistant sealing material is selected under low-temperature conditions, and high-temperature-resistant sealing material is selected under high-temperature conditions. The sealing material cannot meet the performance requirements of low-temperature resistance and high-temperature resistance at the same time. The selected refrigerant seal has poor sealing performance for R744 refrigerant in harsh environments.

It should be noted that the refrigerant in the thermal management system mentioned in the present disclosure includes, but is not limited to, R744, R22, R32, R290, R404A, R410A, R134a, R142b, and R407c.

Since R744 (carbon dioxide refrigerant) is a natural working fluid with minimal damage to the ozone layer and an Ozone Depletion Potential (ODP) coefficient of 0 and a Global Warming Potential (GWP) coefficient of only 1, which has minimal impact on the environment. At present, R744 has become a new hot research direction in the field of refrigerants. Rubber refrigerant seals used in thermal management systems need to withstand a broad operating temperature range. That is, the rubber refrigerant seals will be subjected to low and high temperature conditions. Under low temperature conditions, the flexibility of the internal structure of the rubber sealing material decreases, resulting in poor sealing performance for carbon dioxide. Under the temperature and pressure condition of 31°C and 7.3MPa, carbon dioxide exists in a supercritical state. Therefore, the rubber seals also need to withstand the repeated extrusion effect of high-pressure supercritical carbon dioxide fluid above 10MPa. Under such harsh working conditions, the rubber sealing material or refrigerant seal may cause sealing reliability decrease issues, such as bubbling damage, extrusion breakage, and degradation of mechanical properties. Therefore, the refrigerant seals are required to withstand harsh environmental impacts and reduce these damage issues. In addition, due to the requirement for extremely low leakage of R744 in the thermal management system, it is necessary for seals to have good sealing performance for R744 in harsh operation environments.

"Bubbling damage" refers to the phenomenon that due to the interaction between the refrigerant seal or sealing material and the high-pressure supercritical carbon dioxide fluid, the high-pressure fluid is quickly depressurized, causing cracks extension inside the refrigerant seal or sealing material. The carbon dioxide fluid may exist in the form of supercritical carbon dioxide. After long-term contact with the refrigerant seal or sealing material, the carbon dioxide molecules diffuse into the interior of the rubber, so that the rubber volume expands, and the refrigerant seal protrudes from the specified set position (for example, the O-ring groove) and engages with the gap around the set position, resulting in "extrusion breakage" of the refrigerant seal.

It should be noted that the properties of supercritical carbon dioxide are between gas and liquid states, with both gaseous and liquid properties. The supercritical carbon dioxide exists in gaseous form, but its density is similar to that of liquid. The supercritical carbon dioxide has high diffusion properties, zero surface tension, low viscosity and small molecular size. The supercritical carbon dioxide refers to a carbon dioxide fluid (supercritical fluid) maintained above the critical temperature and critical pressure. The molecular diameter of carbon dioxide is approximately 230-240 pm, which is less than the molecular diameter of most coolants (refrigerants). Therefore, the thermal management system is susceptible to leakage during operation.

The present disclosure provides a refrigerant seal including a rubber compound having an -OCF₃ bond and a rubber compound having a -CH₂CH(CN)- bond. The rubber compound having the -OCF₃ bond and the rubber compound having the -CH₂CH(CN)- bond are formulated. The -OCF₃ bond and the -CH₂CH(CN)- bond are polar bonds, and the rubber compound having the -OCF₃ bond and the rubber compound having the -CH₂CH(CN)- bond are polar rubber compounds, both of which have good synergistic effects, so as to obtain a refrigerant seal with good sealing performance in a wide temperature range of working temperatures. That is, the refrigerant seal has good sealing performance for R744 under both low and high temperature conditions, and also has high mechanical properties.

In some embodiments of the present disclosure, a weight ratio of the rubber compound having the -OCF₃ bond to the rubber compound having the -CH₂CH(CN)- bond in the refrigerant seal ranges from 1:1 to 9:1, which may be selected from 1:1, 1.5:1, 2:1, 2.5:1, 3:1, 3.5:1, 4:1, 4.5:1, 5:1, 5.5:1, 6:1, 6.5:1, 7:1, 7.5:1, 8:1, 8.5:1, and 9:1, or may be other values within the range, which may be be selected according to actual needs, and is not limited thereto herein. By using the rubber compound having the -OCF₃ bond and the rubber compound having -CH₂CH(CN)- bond in a specific weight ratio, both of which have polar chemical bonds, the rubber compound having the -OCF₃ bond contains a certain number of -OCF₃ bonds, and the rubber compound having the -CH₂CH(CN)- bonds contains a certain number of -CH₂CH(CN)- bonds, the -OCF₃ bonds and the -CH₂CH(CN)- bonds with undergo a certain physical and chemical reactions, thereby forming C-C bridging bonds for combination, and obtaining a refrigerant seal with good performance. As such, the refrigerant seal has good sealing performance, low-temperature resistance and high-temperature resistance, and meanwhile, the mechanical properties, such as tear strength, of the refrigerant seal are improved. If the weight ratio is lower than this range, that is, the content of the rubber compound having the -OCF₃ bond is less than the content of the rubber compound having the -CH₂CH(CN)- bond, due to the greater content of the rubber compound having the -CH₂CH(CN)- bond, the mechanical properties and sealing performance of the refrigerant seal at high temperatures are reduced. On the contrary, if the weight ratio is higher than this range, that is, the weight ratio of the rubber compound having the -OCF₃ bond to the rubber compound having the -CH₂CH(CN)- bond is higher than 9:1, due to the greater content of the rubber compound having the -OCF₃ bond, the mechanical properties and sealing performance of the refrigerant seal at low temperatures are reduced.

In some embodiments of the present disclosure, the chemical structure formula of the rubber compound having the -OCF₃ bond is as follows: 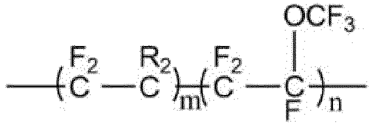 where R is selected from H or F, and m and n are natural numbers, such as 1, 2, 3 and 4.

Further, the rubber compound having the -OCF3 bond is fluoroelastomer. The specific desired rubber compound having the -OCF3 bond may be selected according to the molecular weight of the fluoroelastomer.

In some embodiments of the present disclosure, the fluorine atom content of the fluoroelastomer may be 63-70 wt%, which may be selected from 63.5 wt%, 64 wt%, 64.5 wt%, 65 wt%, 65.5 wt%, 66 wt%, 66.5 wt%, 67 wt%, 67.5 wt%, 68 wt%, 68.5 wt%, 69 wt%, and 69.5 wt%, or may be other values within the above range, which may be selected according to actual needs, and is not limited thereto herein. If the fluorine atom content of the fluoroelastomer is greater than 70 wt%, the operational performance of the refrigerant seal under low temperature conditions would be reduced. If the fluorine atom content of the fluoroelastomer is less than 63 wt%, the operational performance of the refrigerant seal under high temperature conditions would be reduced. Therefore, a fluoroelastomer with a specific fluorine atom content is selected, which has a specific content of -OCF₃ bonds, and is formulated with the rubber compound having the -CH₂CH(CN)- bond, and the two rubber compounds produce synergistic effects, so that the refrigerant seal has good sealing performance and mechanical properties in a wide temperature range of working temperatures, as well as a good service life.

In some embodiments of the present disclosure, the chemical structure formula of the rubber compound having the -CH₂CH(CN)- bond is as follows: 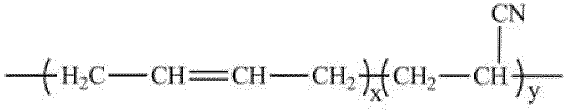 where x and y are natural numbers, such as 1, 2, 3 and 4.

Further, the rubber compound having the -CH2CH(CN)- bond may be nitrile butadiene rubber. Furthermore, the nitrile butadiene rubber may be hydrogenated nitrile butadiene rubber. The hydrogenated nitrile butadiene rubber is obtained by selectively hydrogenating the double bonds in the main chain of the nitrile butadiene rubber. The specific required rubber compound having the -CH2CH(CN)- bond may be selected according to the molecular weight of the hydrogenated nitrile butadiene rubber. In an embodiment, the residual double bond content of the hydrogenated nitrile butadiene rubber of the present disclosure may be less than or equal to 1 wt%.

In some embodiments of the present disclosure, the acrylonitrile content of the hydrogenated nitrile butadiene rubber may be 15-20 wt%, which may be selected from 15.5 wt%, 16 wt%, 16.5 wt%, 17 wt%, 17.5 wt%, 18 wt%, 18.5 wt%, 19 wt %, and 19.5 wt%, or may be other values within the range, which may be selected according to actual needs, and is not limited thereto herein. If the acrylonitrile content of the hydrogenated nitrile butadiene rubber is greater than 20 wt%, the operational performance of the refrigerant seal under low temperature conditions will be reduced. On the contrary, if the acrylonitrile content is less than 15 wt%, the operational performance of the refrigerant seal under high temperature conditions will be reduced. Therefore, a hydrogenated nitrile butadiene rubber with a specific range of acrylonitrile content is selected, which has a specific content of -CH₂CH(CN)-bonds, and is easy to be combined with other substances to form polymers due to C≡N contained therein. Thus, the hydrogenated nitrile butadiene rubber and a specific content of the rubber compound having the -OCF₃ bond are formulated, both of which have good synergistic effects, so that the refrigerant seal has good sealing performance and mechanical properties in a wide temperature range of working temperatures, the extrusion breakage of the refrigerant seal is reduced, and the refrigerant seal has a good service life.

In some embodiments of the present disclosure, the rubber compound having the -OCF₃ bond and the rubber compound having the -CH₂CH(CN)- bond in the refrigerant seal are present in a three-dimensional network structure formed by crosslinking, and the gaps in the internal structure of the seal are small, making it difficult for carbon dioxide to pass through.

In some embodiments of the present disclosure, the refrigerant seal may include the rubber compound having the -OCF₃ bond and the rubber compound having the - CH₂CH(CN)- bond. The sum of the weights of the fluoroelastomer and the hydrogenated nitrile butadiene rubber totally account for 100 parts by weight, and the fluoroelastomer may account for greater than or equal to 50 parts. Further, the weight of the fluoroelastomer may be 50-90 parts, which may be selected from 51 parts, 53 parts, 55 parts, 57 parts, 59 parts, 61 parts, 63 parts, 65 parts, 67 parts, 69 parts, 71 parts, 73 parts, 75 parts, 77 parts, 79 parts, 81 parts, 83 parts, 85 parts, 87 parts, and 89 parts, or may be other values within the range, which may be selected according to actual needs, and is not limited thereto herein. The weight of the hydrogenated nitrile butadiene rubber may be 10-50 parts, which may be selected from 10 parts, 12 parts, 14 parts, 16 parts, 18 parts, 20 parts, 22 parts, 24 parts, 26 parts, 28 parts, 30 parts, 32 parts, 34 parts, 36 parts, 38 parts, 40 parts, 42 parts, 44 parts, 46 parts, 48 parts, and 50 parts, or may be other values within the range, which may be selected according to actual needs, and is not limited thereto herein. The rubber compound having the -OCF₃ bond and the rubber compound having the -CH₂CH(CN)- bond are formulated in a specific weight ration. Both the rubber compounds are polar rubber compounds having polar bonds, and thus have different chemically active groups, so that the two rubber compounds can undergo certain physical and chemical reactions, that is, they both have good synergistic effects, thereby making the refrigerant seal having good operational performance.

It should be noted that "wt %" in the present disclosure refers to mass percentage or weight percentage. "Parts by weight" refers to the basic unit of measurement for the weight ratio relationship of multiple components, and 1 part can represent any unit mass. For example, 1 part can represent 1 g, 1.8 g, or 5 g, etc. The term "phr" is the unit of mass "parts per hectogram", indicating the content added per 100 parts by weight.

In some embodiments of the present disclosure, the refrigerant seal may include a filler. The filler may include black carbon and fibrous nanostructures. The black carbon may be selected from rubber black carbon, cement mortar black carbon, pyrolysis black carbon, semi-reinforcing black carbon and special black carbon, etc. Special black carbon is a type of black carbon that can provide the product with special performance requirements, such as high wear-resistant black carbon, which can provide the product with good wear resistance. Selecting different types of black carbon to add to the refrigerant seal can serve functions of reinforcement and filling to improve the comprehensive performance of the refrigerant seal, such as mechanical properties. The fibrous nanostructures may be selected from at least one of carbon fiber, aramid nanofiber, graphene, carbon nanotube and aramid pulp. That is, the fibrous nanostructures may be selected from a single fibrous nanostructure, or two, three, four, or five types of fibrous nanostructures may be used in combination. The fibrous nanostructures and black carbon are simultanously added to the refrigerant seal. The fibrous nanostructures and black carbon may be filled into the structure of the rubber compound to improve the sealing performance and mechanical properties of the refrigerant seal. The carbon nanotubes of the present disclosure may be selected from single-walled carbon nanotubes or multi-walled carbon nanotubes according to actual needs.

**In** some embodiments of the present disclosure, the average diameter of the fibrous nanostructures may be 2-10 nm, which may be selected from 2 nm, 3 nm, 4 nm, 5 nm, 6 nm, 7 nm, 8 nm, 9 nm, 10 nm, or may be other values within the range, which may be selected according to actual needs, and is not limited thereto herein. Selecting fibrous nanostructures with appropriate diameters can reduce the issue of excessive diameter leading to more cracks and a decrease in the mechanical properties of the refrigerant seal, as well as the issue of insufficient diameter that cannot meet the requirements for the mechanical properties of the refrigerant seal. Selecting fibrous nanostructures with appropriate diameters can allow the fibrous nanostructures to enter the three-dimensional network structure formed by crosslinking of the rubber compounds, so as to improve the density of the internal structure of the refrigerant seal, and improve the sealing performance and mechanical properties of the refrigerant seal, so as to reduce the extrusion damage to the rubber compounds caused by the diffusion of carbon dioxide molecules in the rubber compound network.

It should be noted that the average diameter mentioned in the present disclosure may be obtained by measuring the diameters of 50 randomly selected fibrous nanostructures using a transmission electron microscope and calculating the average value thereof. The fibrous nanostructures may be continuous fibers or chopped fibers.

**In** some embodiments of the present disclosure, the refrigerant seal may include a crosslinking agent and a crosslinking aid. The crosslinking agent may form bridging bonds, such as vulcanization bonds, between the molecular chains of the same or different rubber compounds, thereby crosslinking the rubber compounds to form a three-dimensional network structure with large molecular chains, so as to improve the mechanical properties of the rubber compounds. The crosslinking aid may provide more reactive sites, and the type and number of functional groups, the polarity of the molecules, and the amount of the molecular weight of the crosslinking aid may affect the crosslinking efficiency or vulcanization efficiency of the rubber compounds. Meanwhile, the polarity of the crosslinking aid can also affect its solubility in the rubber compounds, thereby affecting the degree of crosslinking of the rubber compounds.

Furthermore, in some embodiments of the present disclosure, the crosslinking agent may be selected from 2,5-Dimethyl-2,5-di(tert-butylperoxy)hexane. The 2,5-Dimethyl-2,5-di(tert-butylperoxy)hexane may be in the form of powder with an effective content of 45-50 wt%. The crosslinking aid may be selected from at least one of triisoallyl isocyanurate and zinc oxide. The triisoallyl isocyanurate may be in the form of powder with an effective content of 70-75 wt%. In some embodiments of the present disclosure, 2,5-Dimethyl-2,5-di(tert-butylperoxy)hexane is selected as the crosslinking agent, and triisoallyl isocyanurate or zinc oxide or a compound of triisoallyl isocyanurate and zinc oxide are selected as the crosslinking aid, and the rubber compound having the -OCF₃ bond and the rubber compound having the -CH₂CH(CN)- bond are crosslinked or vulcanized, thereby improving the crosslinking degree of the two polar rubber compounds, and further improving the sealing performance and mechanical properties of the refrigerant seal, so that the refrigerant seal can have a long service life under harsh environments.

Furthermore, in some embodiments of the present disclosure, in parts by weight, the crosslinking agent may be 1-5 parts, which may be selected from 1 part, 1.5 parts, 2 parts, 2.5 parts, 3 parts, 3.5 parts, 4 parts, 4.5 parts, and 5 parts, or may be other values within the range, which may be selected according to actual needs, and is not limited thereto herein. The crosslinking aid may be 1-10 parts, which may be selected from 1 part, 1.5 parts, 2 parts, 2.5 parts, 3 parts, 3.5 parts, 4 parts, 4.5 parts, 5 parts, 5.5 parts, 6 parts, 6.5 parts, 7 parts, 7.5 parts, 8 parts, 8.5 parts, 9 parts, 9.5 parts, and 10 parts, or may be other values within the range, which may be selected according to actual needs, and is not limited thereto herein. Since the crosslinking agent and the crosslinking aid in a specific content range have specific types and quantities of functional groups, selecting the crosslinking agent and the crosslinking aid in the specific content range has a good crosslinking effect on the rubber compound having the -OCF₃ bond and the rubber compound having the -CH₂CH(CN)- bond, thereby improving the mechanical properties of the refrigerant seal, and making the refrigerant seal to have good performance in a wide temperature range of working temperatures, which is suitable for sealing supercritical R744 effective.

In some embodiments of the present disclosure, the operation pressure of the refrigerant seal is 1.3-34 MPa, and the operation temperature of the refrigerant seal is -30 °C to +165 °C. That is, the refrigerant seal has both good low-temperature resistance and high-temperature resistance, which can withstand the wide temperature range of working temperatures of -30 °C to +165 °C, and at the same time, the repeated extrusion effect of high-pressure supercritical carbon dioxide fluid above 10 MPa, so that the refrigerant seal has good mechanical properties and sealing performance under harsh working conditions.

In some embodiments of the present disclosure, the refrigerant seal has at least one of the following properties: (a) under the test conditions of GB/T 528-1998, the tensile strength is greater than or equal to 20.5 MPa; (b) under the test conditions of GB/T 529-2008, the tear strength is greater than or equal to 30 N/mm; and (c) under the test conditions of GB/T 7755.1-2018, the R744 permeability is less than or equal to 1.0×10⁻¹⁰ g/cm²·s·atm·25°C. The refrigerant seal of the present disclosure has good mechanical properties and sealing performance.

The present disclosure further provides a method for manufacturing a refrigerant seal, including: step S1, an uncured rubber compound having an -OCF₃ bond and an uncured rubber compound having a -CH₂CH(CN)- bond are provided; and step S2, the uncured rubber compound having the -OCF₃ bond and the uncured rubber compound having the - CH₂CH(CN)- bond are mixed and vulcanized in a machine to form the refrigerant seal.

In some embodiments of the present disclosure, the uncured rubber compound having the -OCF₃ bond is selected from uncured fluoroelastomer rubber. The fluorine atom content of the uncured fluoroelastomer rubber is 63-70 wt% and the Mooney viscosity (ML1+10 min) at 121°C is 43-47 MU. That is, the uncured fluoroelastomer rubber is preheated at 121°C for 1 min and is rotated through a large rotor for 10 min, and the Mooney viscosity of the uncured fluoroelastomer rubber is 43-47 MU. The uncured rubber compound having the -CH₂CH(CN)- bond may be selected from hydrogenated uncured nitrile butadiene rubber. The acrylonitrile content of the hydrogenated uncured nitrile butadiene rubber is 15-20 wt%, and the Mooney viscosity (ML1+10 min) at 121°C is 65-75 MU. That is, the uncured fluoroelastomer rubber is preheated at 121°C for 1 min and is rotated through a large rotor for 10 min, and the Mooney viscosity of the hydrogenated uncured nitrile butadiene rubber is 65-75 MU. The Mooney viscosity is used to reflect the processing performance, molecular weight and distribution range of the rubber compound. Uncured fluoroelastomer rubber and hydrogenated nitrile butadiene rubber with a suitable Mooney viscosity range are selected, both of which are polar rubber compounds and contain specific active functional groups. The two rubbers have good synergistic effects, so that the uncured fluoroelastomer rubber and the hydrogenated uncured nitrile butadiene rubber can be well crosslinked and combined.

In some embodiments of the present disclosure, step S1 further includes a step S11 of providing an auxiliary filler. The auxiliary filler includes an inorganic filler (black carbon and fibrous nanostructures), a crosslinking agent and a crosslinking aid. In parts by weight, the uncured fluoroelastomer rubber is 50-90 parts, the hydrogenated uncured nitrile butadiene rubber is 10-50 parts, the black carbon is 0-50 parts, the fibrous nanostructures is 0-30 parts, the crosslinking agent is 1-5 parts, and the crosslinking aid is 1-10 parts. In some embodiments of the present disclosure, specific contents of uncured fluoroelastomer rubber, hydrogenated nitrile butadiene rubber, black carbon, fibrous nanostructures, crosslinking agent and crosslinking aid are selected, and these substances may undergo certain physical and chemical combinations to form the refrigerant seal. The refrigerant seal has good sealing performance and mechanical properties in a wide temperature range of working temperatures.

In some embodiments of the present disclosure, step S2 includes step S21 of placing the uncured rubber compound having the -OCF₃ bond and the uncured rubber compound having the -CH₂CH(CN)- bond in an internal mixer and mixing them uniformly. In an embodiment, the internal mixing initial temperature and the rotor speed of the internal mixer are set. After reaching the initial temperature, the uncured rubber compound having the -OCF₃ bond and the uncured rubber compound having the -CH₂CH(CN)- bond are placed in the internal mixer and mixed uniformly.

In some embodiments of the present disclosure, step S21 further includes: adding black carbon, fibrous nanostructures, the crosslinking agent and the crosslinking aid into the internal mixer for mixing to form a mixed compound. In an embodiment, the black carbon, fibrous nanostructures, crosslinking agent and crosslinking aid are placed in the internal mixer in which the uncured rubber compound having the -OCF₃ bond and the uncured rubber compound having the -CH₂CH(CN)- bond are mixed uniformly for mixing to form the mixed compound.

Furthermore, in some embodiments of the present disclosure, step S21 includes: setting an internal mixing initial temperature and a rotor speed of the internal mixer, and after reaching the initial temperature, placing 50-90 parts by weight of uncured fluoroelastomer rubber and 10-50 parts by weight of hydrogenated uncured nitrile butadiene rubber in the internal mixer and mixing them uniformly.

Furthermore, in some embodiments of the present disclosure, step S22 includes: placing 0-50 parts by weight of black carbon, 0-30 parts by weight of fibrous nanostructures, 1-5 parts by weight of crosslinking agent and 1-10 parts by weight of crosslinking aid sequentially in the internal mixer in step S21 for mixing to form the mixed compound.

In some embodiments of the present disclosure, the process conditions for mixing may be that: the internal mixing initial temperature is 65-75 °C, the rotor speed is 50-70 r/min. The operation parameters for mixing may be that: a mixing duration of the mixed compound is 5-15 min, a rubber discharging temperature is less than or equal to 120 °C, and the number of sheeting on an open mill is 3-7 times.

In some embodiments of the present disclosure, step S2 further includes step S23 of vulcanizing the various components after mixing to form the refrigerant seal. In an embodiment, the obtained mixed compound is placed in a mold and vulcanized on a vulcanizer to form the refrigerant seal.

Furthermore, in some embodiments of the present disclosure, the process parameters for vulcanization may be that: the first stage vulcanization conditions include: a vulcanization temperature of 155-165 °C, a vulcanization duration of 15-25 min, and a vulcanization pressure of 5-15 Mpa; and the second stage vulcanization conditions include: a vulcanization temperature of 150-230 °C, and a vulcanization duration of 3.5-4 h.

In some embodiments of the present disclosure, the uncured fluoroelastomer rubber and the hydrogenated uncured nitrile butadiene rubber are mixed uniformly, and then the black carbon, fibrous nanostructures, crosslinking agent and crosslinking aid are added for mixing and vulcanization. The -OCF₃ bond in the uncured fluoroelastomer rubber has a vulcanization site, and the C≡N bond in the hydrogenated uncured nitrile butadiene rubber has a vulcanization site. Both the uncured fluoroelastomer rubber and the hydrogenated nitrile butadiene rubber are polar rubber compounds, and the two have good synergistic effects. Under the conditions of the crosslinking agent and the crosslinking aid, the uncured fluoroelastomer rubber and the hydrogenated nitrile butadiene rubber are promoted to undergo vulcanization and crosslinking to form the three-dimensional network structure, and the nanoscale fibrous nanostructures and black carbon may be filled into the three-dimensional network structure to improve the density of the internal structure of the refrigerant seal, thereby improving the sealing performance and mechanical properties of the refrigerant seal in a wide temperature range of working temperatures, such that the refrigerant seal has a long service life under harsh environments.

It should be noted that the uncured rubber in the present disclosure is the parent material for manufacturing rubber products, referring to unvulcanized rubber material, and the internal structure thereof is generally a linear chain structure.

The present disclosure further provides a thermal management assembly, including a functional device, a connector and a first seal, the functional device is sealingly connected to the first seal, and the connector is sealingly connected to the first seal. The functional device includes at least one of a heat exchange device, a compressor 2 and a throttling device 3. The thermal management assembly can be configured to circulate a refrigerant, such as R744.

In some embodiments of the present disclosure, the thermal management assembly includes a first functional part, a second functional part and a second seal, the first functional part is sealingly connected to the second seal, and the second functional part is sealingly connected to the second seal. The thermal management assembly can be configured to circulate R744 refrigerant.

It should be noted that the first seal and the second seal are both seals provided in the present disclosure.

In some embodiments of the present disclosure, in the thermal management assembly, the first seal is sealingly connected to the functional device and the connector, respectively, and the first functional part and the second functional part are respectively sealingly connected to the second seal. The first seal, as well as the second seal, includes a rubber compound having a -OCF₃ bond and a rubber compound having a -CH₂CH(CN)-bond. The rubber compound having the -OCF₃ bond and the rubber compound having the - CH₂CH(CN)- bond are formulated, both of which are polar rubber compounds, and have good synergistic effects, such that the seal of the thermal management assembly has good sealing performance for R744 refrigerant, and the seal has good mechanical properties, low-temperature resistance and high-temperature resistance.

In some embodiments of the present disclosure, the thermal management assembly includes the compressor 2, the heat exchange device and the throttling device 3, and at least one of the compressor 2, the heat exchange device and the throttling device 3 is sealingly connected to the connector through the seal.

In some embodiments of the present disclosure, the connector may be a connecting pipe. At least one of the compressor 2, the heat exchange device and the throttling device 3 is connected to other devices through the connector. At least one of the compressor 2, the heat exchange device and the throttling device 3 is sealingly connected to the connecting pipe through the seal. For example, one end of the connecting pipe is sealingly connected to the compressor 2 through the first seal, and the other end of the connecting pipe is sealingly connected to the heat exchange device through the second seal. The first seal and the second seal are seals provided in the present disclosure.

In some further embodiments of the present disclosure, the connector may be an integrated flow channel module. The integrated flow channel module has a flow channel. The integrated flow channel module is, for example, a flow channel plate. At least one of the compressor 2, the heat exchange device, and the throttling device 3 is installed on the integrated flow channel module. At least one of the compressor 2, the heat exchange device, and the throttling device 3 is sealingly connected to the flow channel plate through the seal provided in the present disclosure.

It should be noted that the heat exchange device in the present disclosure may be a first heat exchanger 1001 and a second heat exchanger 1002.

In some embodiments of the present disclosure, the functional device includes the compressor 2, the first heat exchanger 1001, the second heat exchanger 1002, and the throttling device 3. When the thermal management assembly is in operation, the R744 refrigerant flows into the first heat exchanger 1001 through the compressor 2, then flows into the throttling device 3 after heat exchange in the first heat exchanger 1001, then flows into the second heat exchanger 1002, and finally, return to the compressor 2 after heat exchange in the second heat exchanger 1002.

In some embodiments of the present disclosure, the compressor 2 and the first heat exchanger 1001 are sealingly connected to the connecting pipe, respectively, and at least one of the compressor 2, the first heat exchanger 1001, the second heat exchanger 1002, and the throttling device 3 is sealingly connected to the flow channel plate through the seal provided in the present disclosure, thereby reducing the leakage of the refrigerant in the thermal management assembly, that is, reducing the leakage of the refrigerant from the thermal management assembly to the external environment.

In some embodiments of the present disclosure, the thermal management assembly further includes a reversing device 4, the compressor 2 is connected to the reversing device 4, and the first heat exchanger 1001 and the second heat exchanger 1002 are both connected to the reversing device 4 and the throttling device 3, respectively. The reversing device 4 is able to switch between different operation modes of the thermal management assembly.

In some embodiments of the present disclosure, the connector includes the first functional part and the second functional part, and the first functional part and the second functional part are sealingly connected to the seal, respectively. That is, the first functional part and the second functional part are sealingly connected to each other through the seal. **In** some embodiments of the present disclosure, one component or device may simultaneously include the first functional part, the second functional part and the seal, that is, the first functional part and the second functional part belong to the main body structure of one component or device. As such, the thermal management assembly can be configured to circulate R744 refrigerant and reduce internal leakage of R744.

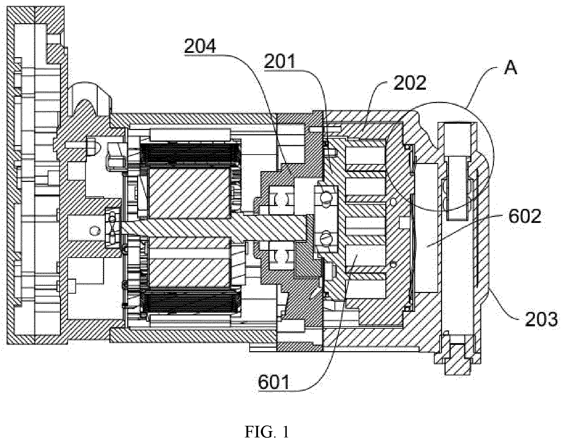

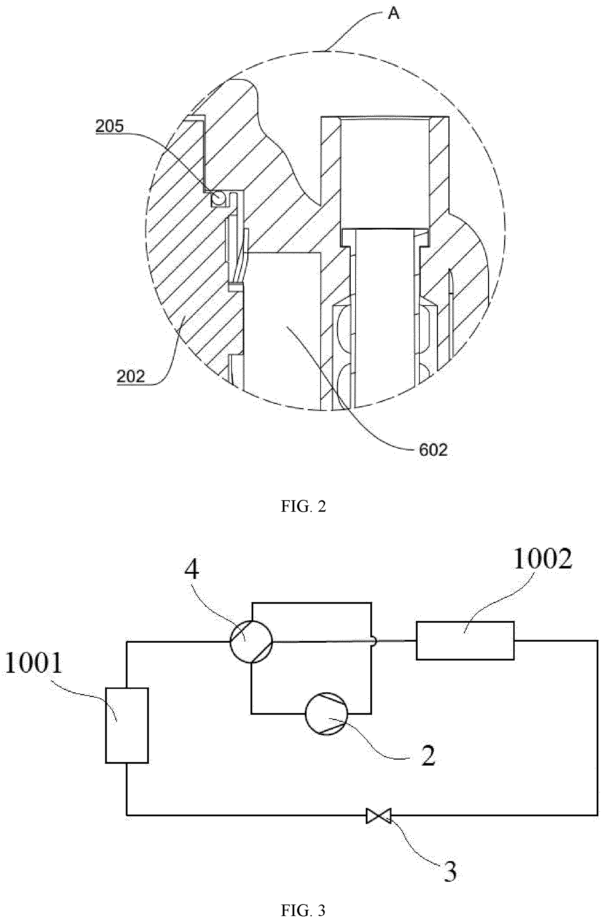

As shown in FIG. 1 and FIG. 2, in some embodiments of the present disclosure, the thermal management assembly includes a first functional part, a second functional part and a seal. The first functional part and the second functional part are both the main body structures of the thermal management assembly, such as the compressor 2. **In** some embodiments of the present disclosure, the compressor 2 includes an orbiting scroll 201, a stationary scroll 202, an exhaust cover 203, a bearing seat 204 and a seal 205. The seal 10 is located between the outer wall of the stationary scroll 202 and the inner wall of the exhaust cover 203. The compressor 2 has a compression chamber 601 and a high-pressure chamber 602. The orbiting scroll 201 and the stationary scroll 202 are meshed with each other to form the compression chamber 601, in which the incoming refrigerant gas can be compressed. The high-pressure chamber 602 is formed between the stationary scroll 202 and the exhaust cover 203, in which the compressed high-pressure gas can be temporarily stored. Since there are multiple compression spaces with different pressures inside the compression chamber 601, leakage is inevitable between adjacent compression chambers with different pressures. Leakage can cause a decrease in volumetric efficiency and an increase in power. Thus, in order to reduce leakage, the compression chamber needs to be sealed. The seal 205 (the seal 205 may be an O-ring) is provided between the outer wall of the stationary scroll 202 and the inner wall of the exhaust cover 203. **In** this case, since the outer wall of the stationary scroll 202 is at least partially located in the exhaust cover 203, and the inner wall of the exhaust cover 203 has a length in the axial direction, the seal 205 can always be kept between the outer wall of the stationary scroll 202 and the inner wall of the exhaust cover 203. Even if the stationary scroll 202 moves axially, there will be no sealing failure.

It should be noted that the thermal management assembly of the present disclosure can be any thermal management assembly that requires sealing of the coolant and reducing coolant leakage, including, but not limited to, a coolant expansion valve, a one-way valve, a heat exchanger, a gas-liquid separator and a compressor, etc. The coolant includes R744.

In some embodiments of the present disclosure, in the thermal management assembly, the weight ratio of the rubber compound having the -OCF₃ bond and the rubber compound having the -CH₂CH(CN)- bond of the seal ranges from 1:1 to 9:1. Furthermore, the rubber compound having the -OCF₃ bond is selected from fluoroelastomer, and the rubber compound having the -CH₂CH(CN)- bond is selected from hydrogenated nitrile butadiene rubber. The weight of the fluoroelastomer and the hydrogenated nitrile butadiene rubber totally account for 100 parts by weight, and the fluoroelastomer accounts for greater than or equal to 50 parts by weight.

In some embodiments of the present disclosure, in the thermal management assembly, the seal further includes the filler, the crosslinking agent and the crosslinking aid. The filler includes the black carbon and the fibrous nanostructures. In parts by weight, the black carbon is 0-50 parts, the fibrous nanostructures are 0-30 parts, the crosslinking agent is 1-5 parts, and the crosslinking aid is 1-10 parts.

Since the seal used in thermal management assembly needs to meet a wide temperature range of working temperatures, and meanwhile, also need to withstand repeated extrusion of high-pressure supercritical carbon dioxide fluid above 10 MPa, of which the operation environment is relatively harsh. Therefore, it is necessary for the seal to be used in a wide temperature range of working temperatures, while meeting the requirements of good sealing performance in both low-temperature operation environment and high-temperature operation environment, and having good mechanical properties, so that the seal can maintain long-term compatibility with the coolant (refrigerant), such as supercritical carbon dioxide for a long time, and reduce the issues of bubbling damage and extrusion breakage of the refrigerant seal, and the thermal management assembly can meet the operation requirements of a wide temperature range and high-pressure fluid environment.

As shown in FIG. 3, the present disclosure further provides a thermal management system, including the compressor 2, the heat exchange device and the throttling device 3. The thermal management system has a refrigerant flow path, the compressor 2, the heat exchange device and the throttling device 3 are provided in the refrigerant flow path, and the refrigerant flow path is configured to circulate R744 refrigerant.

In some embodiments of the present disclosure, the thermal management system further includes the connector and the seal. At least one of the compressor 2, the heat exchange device and the throttling device 3 is sealingly connected to the seal, and the connector is sealingly connected to the seal.

In some embodiments of the present disclosure, the seal of the thermal management system includes the rubber compound having the -OCF₃ bond and the rubber compound having the -CH₂CH(CN)- bond. At least one of the compressor, the heat exchange device and the throttling device is sealingly connected to the seal, and the connector is sealingly connected to the seal. The seal includes the rubber compound having the -OCF₃ bond and the rubber compound having the -CH₂CH(CN)- bond. The rubber compound having the -OCF₃ bond and the rubber compound having the -CH₂CH(CN)- bond are formulated, both of which are polar rubber compounds, and have good synergistic effects, so that the seal of the thermal management system has good sealing performance for R744 refrigerant, and the seal has good mechanical properties, low-temperature resistance and high-temperature resistance.

In some embodiments of the present disclosure, the thermal management system further includes the reversing device 4. The reversing device 4 is provided in the refrigerant flow path and is configured to switch between different operation modes of the thermal management system. The heat exchange device includes the first heat exchanger 1001 and the second heat exchanger 1002.

When the R744 refrigerant flows in the thermal management system, the R744 refrigerant flows into the first heat exchanger 1001 through the compressor 2, then flows into the throttling device 3 after heat exchange in the first heat exchanger 1001, then flows into the second heat exchanger 1002, and finally flows into the compressor 2 again after heat exchange in the second heat exchanger 1002. Alternatively, the R744 refrigerant flows into the second heat exchanger 1002 through the compressor 2, then flows into the throttling device 3 after heat exchange in the second heat exchanger 1002, then flows into the first heat exchanger 1001, and finally flows into the compressor 2 again after heat exchange in the first heat exchanger 1001.

In some embodiments of thermal management systems of the present disclosure, there may be two operation modes, namely refrigerating mode and heating mode. The reversing device 4 is configured to switch between the refrigerating mode and the heating mode. Both the first heat exchanger 1001 and the second heat exchanger 1002 may be condensers and evaporators. When the first heat exchanger 1001 is a condenser, the second heat exchanger 1002 is an evaporator; and when the first heat exchanger 1001 is an evaporator, the second heat exchanger 1002 is a condenser.

In the refrigerating mode, the compressor 2 compresses the gaseous refrigerant so that the refrigerant becomes a high-temperature and high-pressure gas, and is sent to the first heat exchanger 1001 (condenser) for cooling through the reversing device 4. After cooling, the gas becomes a medium-temperature and high-pressure liquid refrigerant. Then, the medium-temperature liquid refrigerant is throttled and depressurized by the throttling device 3 to form a low-temperature and low-pressure gas-liquid mixture. After that, the mixture absorbs heat from the air in the second heat exchanger 1002 (evaporator), and then, is vaporized into a gas. Finally, the gas returns to the compressor 2 for recompression, thereby continuously circulating to perform refrigeration. In the heating mode, the refrigerant flows in the condenser and the evaporator in a direction opposite to that in the refrigerating mode, thus the outdoor unit blows cold air and the indoor unit blows hot air during heating. That is, the compressor 2 compresses the gaseous refrigerant so that the refrigerant becomes a high-temperature and high-pressure gas, and is sent to the second heat exchanger 1001 (condenser) for cooling through the reversing device 4. After cooling, the gas becomes a medium-temperature and high-pressure liquid refrigerant. Then, the medium-temperature liquid refrigerant is throttled and depressurized by the throttling device 3 to form a low-temperature and low-pressure gas-liquid mixture. After that, the mixture absorbs heat from the air in the first exchanger 1002 (evaporator), and then, is vaporized into a gas. Finally, the gas returns to the compressor 2 for recompression, hereby continuously circulating to perform heating. Therefore, the seal of the thermal management assembly has good low-temperature and high-temperature resistance.

The present disclosure further provides a composite material for refrigerant seal, including the rubber compound having the -OCF₃ bond and the rubber compound having the -CH₂CH(CN)- bond. The weight ratio of the rubber compound having the -OCF₃ bond to the rubber compound having the -CH₂CH(CN)- bond ranges from 1:1 to 9:1.

In some embodiments of the present disclosure, the rubber compound having the -OCF₃ bond may be fluoroelastomer, and the rubber compound having the -CH₂CH(CN)-bond may be hydrogenated nitrile butadiene rubber.

In some embodiments of the present disclosure, the composite material for R744 seal includes the rubber compound having the -OCF₃ bond and the rubber compound having the -CH₂CH(CN)- bond. The rubber compound having the -OCF₃ bond and the rubber compound having the -CH₂CH(CN)- bond are formulated, both of which are polar rubber compounds, and have good synergistic effects, so that the composite material has good sealing performance for R744 refrigerant and good mechanical properties.

The method for manufacturing the refrigerant seal of the present disclosure is described below in conjunction with specific embodiments.

### Embodiment 1

A method for manufacturing a refrigerant seal includes providing raw materials for each component. The components and proportions are shown in Table 1.

**Table 1: proportions of component contents**

| Number | Material name | Parts by weight |
|---|---|---|
| 1 | Fluoroelastomer | 80 phr |
| 2 | Hydrogenated nitrile butadiene rubber | 20 phr |
| 2 | Pyrolysis black carbon | 20 phr |
| 3 | Semi-reinforcing black carbon | 10 phr |
| 4 | High wear-resistant black carbon | 10 phr |
| 5 | 2,5-Dimethyl-2,5-di(tert-butylperoxy)hexane | 2 phr |
| 6 | Zinc oxide | 5 phr |
| 7 | Triisoallyl isocyanurate | 3 phr |
| 8 | Erucamide | 0.5 phr |
| 9 | Aramid nanofiber | 5 phr |

The method for manufacturing the refrigerant seal includes the following steps.

Step S11, 80 phr uncured fluoroelastomer rubber (fluorine atom content of 65wt%, Mooney viscosity (ML1+10min) at 121°C of 45MU), 20 phr hydrogenated uncured nitrile butadiene rubber (acrylonitrile content of 18 wt%, residual double bond content of 0.8 wt%), 20 phr pyrolysis black carbon, 10 phr semi-reinforcing black carbon, 10 phr high wear-resistant black carbon, 2phr 2,5-Dimethyl-2,5-di(tert-butylperoxy)hexane powder (effective content of 48 wt%), 5 phr zinc oxide, 3 phr triisoallyl isocyanurate (effective content of 72wt%), 0.5 phr erucamide and 5 phr aramid nanofibers (average diameter of 5nm) were weighed in parts by weight.

Step S21, the initial temperature of the internal mixer was set to be 70 °C and the rotor speed was set to be 60 r/min, and after reaching the set temperature, the above uncured fluoroelastomer rubber and hydrogenated uncured nitrile butadiene rubber was placed into the mixing chamber of the internal mixer and mixed uniformly.

Step S22, 20 phr pyrolysis black carbon, 10 phr semi-reinforcing black carbon, 10 phr high wear-resistant black carbon, 2 phr 2,5-Dimethyl-2,5-di(tert-butylperoxy)hexane powder (effective content of 48 wt%), 5 phr zinc oxide, 3phr triisoallyl isocyanurate (effective content of 72 wt%), 0.5 phr erucamide and 5 phr aramid nanofibers (average diameter of 5nm) were added into the mixing chamber of the internal mixer sequentially, mixed for 10 min, and the mixed compound was discharged at a temperature of 110 °C, and then subjected to sheeting on the open mill for 5 times to obtain the mixed compound at the off-sheet stage.

Step S23, the above-mentioned mixed compound was placed in a mold and vulcanized on a flat vulcanizer, the vulcanization temperature was 160 °C, the vulcanization duration was 20 minutes, the vulcanization pressure was 10 MPa, and the second stage crosslinking conditions included: the vulcanization temperature was 150 °C, and the vulcanization duration was 4 h.

### Embodiment 2

A method for manufacturing a refrigerant seal includes the following manufacturing steps, which are different from those in Embodiment 1 as follows.

Step S11, 95 phr uncured fluoroelastomer rubber (fluorine atom content of 65 wt%, Mooney viscosity (ML1+10min) at 121 °C of 45 MU,), 5 phr hydrogenated uncured nitrile butadiene rubber (acrylonitrile content of 18 wt%, residual double bond content of 0.8 wt%), 20 phr pyrolysis black carbon, 10 phr semi-reinforcing black carbon, 10 phr high wear-resistant black carbon, 2 phr 2,5-Dimethyl-2,5-di(tert-butylperoxy)hexane powder (effective content of 48 wt%), 5 phr zinc oxide, 3 phr triisoallyl isocyanurate (effective content of 72 wt%), 0.5 phr erucamide and 5 phr aramid nanofibers (average diameter of 5 nm) were weighed in parts by weight.

Step S21, the initial temperature of the internal mixer was set to be 70 °C and the rotor speed was set to be 60 r/min, after reaching the set temperature, 95 phr uncured fluoroelastomer rubber and 5phr hydrogenated uncured nitrile butadiene rubber were placed into the mixing chamber of the internal mixer and mixed uniformly.

Step S22 and step S23 were the same as those in Embodiment 1.

### Embodiment 3

A method for manufacturing a refrigerant seal includes the following manufacturing steps, which are different from those in Embodiment 1 as follows.

S11, 100 phr uncured fluoroelastomer rubber (fluorine atom content of 65wt%, Mooney viscosity (ML1+10min) at 121°C of 4 5 MU), 20 phr pyrolysis black carbon, 10 phr semi-reinforcing black carbon, 10 phr high wear-resistant black carbon, 2 phr 2,5-Dimethyl-2,5-di(tert-butylperoxy)hexane powder (effective content of 48wt%), 5 phr zinc oxide, 3 phr triisoallyl isocyanurate (effective content of 72wt%), 0.5 phr erucamide and 5 phr aramid nanofibers (average diameter of 5nm) were weighed in parts by weight.

S21, the initial temperature of the internal mixer was set to be 70°C and the rotor speed was set to be 60 r/min, after reaching the set temperature, 100 phr uncured fluoroelastomer rubber was placed into the mixing chamber of the internal mixer and mixed uniformly.

Step S22 and step S23 were the same as those in Embodiment 1.

### Embodiment 4

A method for manufacturing a refrigerant seal includes the following manufacturing steps, which are different from those in Embodiment 1 as follows.

S11, 100 phr hydrogenated uncured nitrile butadiene rubber (acrylonitrile content of 18 wt%, residual double bond content of 0.8 wt%), 20 phr pyrolysis black carbon, 10 phr semi-reinforcing black carbon, 10 phr high wear-resistant black carbon, 2 phr 2,5-Dimethyl-2,5-di(tert-butylperoxy)hexane powder (effective content of 48wt%), 5 phr zinc oxide, 3 phr triisoallyl isocyanurate (effective content of 72 wt%), 0.5 phr erucamide and 5 phr aramid nanofibers (average diameter of 5nm) were weighed in parts by weight.

S21, the initial temperature of the internal mixer was set to be 70 °C and the rotor speed was set to 60 r/min, after reaching the set temperature, 100 phr hydrogenated uncured nitrile butadiene rubber were placed into the mixing chamber of the internal mixer and mixed uniformly.

Step S22 and step S23 were the same as those in Embodiment 1.

### Test embodiment 1

The refrigerant seals obtained in Embodiment 1, Embodiment 2, Embodiment 3 and Embodiment 4 were subjected to mechanical property and R744 sealing tests. The test temperature for mechanical property was 23°C. The test properties and test method are shown in Table 2.

**Table 2: test properties and test method**

| Number | Property and unit | | Test method |
|---|---|---|---|
| 1 | Hardness/HA | | GB/T531-1992 |
| 2 | Tensile strength/MPa | | GB/T528-1998 |
| 3 | Elongation at break/% | | GB/T528-1998 |
| 4 | Retraction temperature at low temperature (TR10)/°C | | GB/T7758-2020 |
| 5 | Glass transition temperature/°C | | GB/T29611-2013 |
| 6 | Brittle temperature at low temperature/°C | | GB/T15256-2014 |
| 7 | Tear strength/(N/mm) | | GB/T529-2008 |
| 8 | 165 °C×48 h Aging in hot air | Hardness change/HA | GB/T531.1 |
| | | Change rate of tensile strength /% | GB/T528 |
| | | Change rate of elongation at break/% | GB/T528 |
| | | Compression permanent deformation (Type B)/% | GB/T7759.1-2015 |
| 9 | CO₂ permeability/(g/cm²·s·atm·25°C) | | GB/T7755.1-2018 |

The mechanical property and R744 permeability test results of Embodiment 1, Embodiment 2, Embodiment 3 and Embodiment 4 are shown in Table 3.

**Table 3: property test results of refrigerant seals in various Embodiments.**

| Item | | I | II | III | IV |
|---|---|---|---|---|---|
| Hardness/HA | | 88 | 86 | 85 | 72 |
| Tensile strength/MPa | | 22.7 | 21.5 | 20.1 | 13.8 |
| Elongation at break/% | | 150 | 138 | 129 | 419 |
| Retraction temperature at low temperature (TR10)/°C | | -28.5 | -20.1 | -40.7 | -38 |
| Glass transition temperature/°C | | -30.4 | -21.2 | -39.6 | / |
| Brittle temperature at low temperature/°C | | -40 | -25 | -50 | / |
| Tear strength /(N/mm) | | 37.2 | 31.3 | 26.3 | 46.6 |
| 165 °C×48 h Aging in hot air | Hardness change/HA | 2 | 3 | 0 | / |
| | Change rate of tensile strength/% | 7.5 | 8.4 | 9.5 | / |
| | Change rate of elongation at break/% | -2 | 13.2 | 14.7 | / |
| | Compression permanent deformation (Type B)/% | 31.7 | 21.7 | 13.0 | 46.6 |
| CO₂ permeability /×10⁻¹⁰ (g/cm²·s·atm·25°C) | | 0.6 | 1.1 | 1.8 | / |

It can be seen from Table 3 that the hardness of the refrigerant seal in Embodiment 1 is greater than 85HA, the tensile strength is greater than or equal to 20.5MPa, and the tear strength is greater than or equal to 30N/mm. By comparing Embodiment 1, Embodiment 2, Embodiment 3 and Embodiment 4, it can be seen that the hardness and tensile strength of Embodiment 1 and Embodiment 2 are greater than those of Embodiment 3 and Embodiment 4, and the elongation at break of Embodiment 1 and Embodiment 2 is greater than that of Embodiment 3. The tear strength of the refrigerant seals in Embodiment 1 and Embodiment 2 is greater than that of Embodiment 3. It can further be seen from Table 3 that after aging in hot air at 165 °C for 48 h, the change rate of tensile strength and the change rate of elongation at break are less than those of Embodiment 3, and the refrigerant seals in Embodiment 1 and Embodiment 2 have lower retraction temperature at low temperature, lower glass transition temperature and lower brittle temperature at low temperature. The R744 permeability of the refrigerant seal in Embodiment 1 is less than or equal to 1.0×10⁻¹⁰ g/cm²·s·atm·25°C. By comparing Embodiment 1, Embodiment 2 and Embodiment 3, the R744 permeability in Embodiment 1 and Embodiment 2 is less than that in Embodiment 3, which indicates that the refrigerant seal manufactured according to the technical solution of compounding the rubber compound having the -OCF₃ bond and the rubber compound having the -CH₂CH(CN)- bond in some embodiments of the present disclosure has good applications in both high-temperature and low-temperature environments, and is able to meet the sealing requirements for supercritical R744 in the thermal management system.

Since the refrigerant seal in Embodiment 4 does not meet the requirements for the mechanical properties thereof in the thermal management assembly, the refrigerant seal in Embodiment 4 cannot meet the use requirements for supercritical R744 in the thermal management assembly.

In addition, it can be seen from Table 3 that the hardness and tensile strength of the refrigerant seal in Embodiment 1 are greater than those in Embodiment 2, Embodiment 3 and Embodiment 4, and the tear strength is greater than that in Embodiment 2 and Embodiment 3. After aging in hot air at 165 °C for 48 h, the hardness change value in Embodiment 1 is less than that in Embodiment 2, the change rate of tensile strength and the change rate of elongation at break are both less than those in Embodiment 2 and Embodiment 3, and the R744 permeability of the refrigerant seal in Embodiment 1 is much less than that in Embodiment 2 and Embodiment 3, which indicates that in the present disclosure, the rubber compound having the -OCF₃ bond and the rubber compound having the - CH₂CH(CN)- bond are formulated, and when a specific weight ratio is adopted, the filler, the crosslinking agent and the crosslinking aid are added in suitable parts by weight, and the refrigerant seal is obtained after mixing and vulcanizing. Since the uncured fluoroelastomer rubber contains a specific content of -OCF₃ bonds and the hydrogenated uncured nitrile butadiene rubber contains a specific content of C≡N bonds, both of which have good synergistic effects. Under the conditions of crosslinking agent and crosslinking aid, -OCF₃ bonds and -CH₂CH(CN)- bonds can form C-C bridging bonds, and the uncured fluoroelastomer rubber and the hydrogenated nitrile butadiene rubber are promoted to undergo vulcanization and crosslinking to form the three-dimensional network structure. The nanoscale fibrous nanostructures and black carbon can be filled into the three-dimensional network structure, which improves the density of the internal structure of the refrigerant seal and further the mechanical properties of the refrigerant seal in wide temperature range of working temperatures of -30 °C to +165 °C, meets the operation environment of supercritical R744 and can be widely used in the thermal management system.

### Test embodiment 2

According to the SAE J2763 test standard, the seal samples in Embodiment 1 and Embodiment 3 were subjected to a leakage test. Using radial sealing, in Embodiment 1 and Embodiment 3, 5 samples were taken and tested under 6 test working conditions (different temperatures and pressures of refrigerants) to obtain weighted leakage rates, and then the average of the 5 samples was taken to obtain the average leakage rate. The weighted leakage rate is denoted as M, the leakage rate is denoted as X, the weighted ratio is denoted as Y, the leakage rates of the 6 working conditions are denoted as X1, X2, X3, X4, X5, and X6, respectively, the weighted ratios of the 6 working conditions are denoted as Y1, Y2, Y3, Y4, Y5, and Y6, respectively, and thus M=X1·Y1+X2·Y2+X3·Y3+X4·Y4+X5·Y5+X6·Y6.

The five samples in Embodiment 1 are denoted as A1, A2, A3, A4, and A5, respectively, and the 5 samples in Embodiment 3 are denoted as B1, B2, B3, B4, and B5, respectively. The leakage rate test results of Embodiment 1 and Embodiment 3 are shown in Table 4.

**Table 4: leakage rate test results of Embodiment 1 and Embodiment 3**

| Working condition | Leakage rate g/a | | | | | | | | | | Weighted ratio % |
|---|---|---|---|---|---|---|---|---|---|---|---|
| | A1 | B1 | A2 | B2 | A3 | B3 | A4 | B4 | A5 | B5 | |
| -30 °C/1.43 MPa | 0 | 0 | 0 | 0 | 0 | 0 | 0.24 | 0 | 0 | 0 | 4% |
| 0 °C/3.5 MPa | 0 | 0 | 0 | 0 | 0 | 0 | 0.14 | 0 | 0 | 0 | 16% |
| 30 °C/6.9 MPa | 0 | 0 | 0 | 0 | 0 | 0 | 0 | 0.06 | 0 | 0 | 70% |
| 40 °C/7.7 MPa | 0.33 | 0 | 0.49 | 0 | 0.43 | 0.35 | 1.13 | 0.49 | 0.58 | 0 | 4% |
| 100 °C/9.9 MPa | 2.22 | 2.24 | 1.37 | 1.73 | 0.88 | 3.23 | 2.36 | 3.83 | 2.49 | 3.09 | 5% |
| 165 °C/13 MPa | 3.27 | 4.17 | 2.18 | 3.87 | 1.38 | 5.42 | 4.16 | 5.67 | 3.74 | 5.76 | 1% |
| Weighted leakage rate g/a | 0.16 | 0.15 | 0.11 | 0.13 | 0.07 | 0.23 | 0.24 | 0.31 | 0.19 | 0.21 | / |

It can be seen from Table 4 that the average weighted leakage rate of Embodiment 1 is: (0.16+0.11+0.07+0.24+0.19)/5=0.154 g/a, which is less than or equal to 0.2 g/a, and the average weighted leakage rate of Embodiment 3 is: (0.15+0.13+0.23+0.31+0.21)/5=0.206 g/a. The leakage rate of the refrigerant seal in Embodiment 1 is less than that in Embodiment 3. It can be seen that in the present disclosure, the rubber compound having the -OCF₃ bond and the rubber compound having the - CH₂CH(CN)- bond are formulated, and when a specific weight ratio is adopted, the filler, the crosslinking agent and the crosslinking aid are added in suitable parts by weight, and the refrigerant seal is obtained after mixing and vulcanizing. The refrigerant seal still has good sealing performance in wide temperature range of working temperatures of -30 °C to +165 °C and the working pressure conditions of 1.43 MPa~13 MPa.

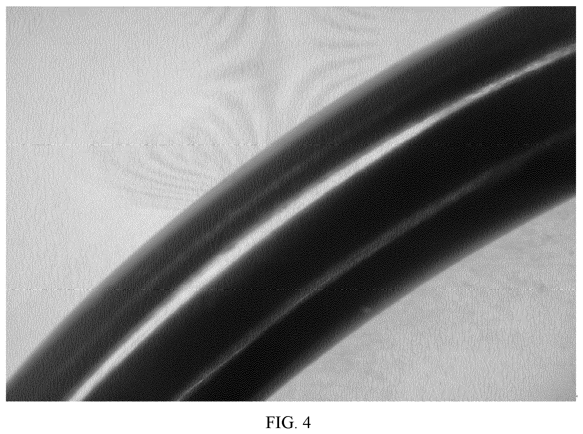

The refrigerant seal in Embodiment 1 was tested and characterized using an optical microscope. The surface optical photograph is shown in Figure 4. The surface of the refrigerant seal in Embodiment 1 is smooth and dense. It can be seen that a refrigerant seal with good comprehensive performance is obtained according to the technical solution of the present disclosure.

The above embodiments are merely used to illustrate the present disclosure and are not intended to limit the technical solutions described in the present disclosure. The present disclosure should be understood based on the comprehension of those skilled in the art. Although the present disclosure has been described in detail in this specification with reference to the above embodiments, it should be understood that those skilled in the art can still modify or make equivalent substitutions to the present disclosure, and all technical solutions and improvements thereof without departing from the spirit and scope of the present disclosure shall fall within in the scope of the claims of the present disclosure.

## Claims

1. A refrigerant seal, comprising a rubber compound having an -OCF₃ bond and a rubber compound having a -CH₂CH(CN)- bond;
wherein a weight ratio of the rubber compound having the -OCF₃ bond to the rubber compound having the -CH₂CH(CN)-bond ranges from 1:1 to 9:1.

2. The refrigerant seal according to claim 1, wherein the rubber compound having the - OCF₃ bond is fluoroelastomer, and the rubber compound having the -CH₂CH(CN)- bond is hydrogenated nitrile butadiene rubber; and
the fluoroelastomer and the hydrogenated nitrile butadiene rubber totally account for 100 parts by weight, and the fluoroelastomer accounts for greater than or equal to 50 parts by weight.

3. The refrigerant seal according to claim 1 or 2, wherein fluorine atom content of the fluoroelastomer is 63-70 wt%; and acrylonitrile content of the hydrogenated nitrile butadiene rubber is 15-20 wt%.

4. The refrigerant seal according to any one of claims 1 to 3, wherein the refrigerant seal further comprises an inorganic filler; the inorganic filler comprises black carbon and fibrous nanostructures; and the black carbon accounts for 0-50 parts by weight, and the fibrous nanostructures account for 0-30 parts by weight.

5. The refrigerant seal according to claim 4, wherein the fibrous nanostructures are selected from at least one of carbon fiber, aramid nanofiber, graphene, carbon nanotube and aramid pulp; and
an average diameter of the fibrous nanostructures is 2-10 nm.

6. The refrigerant seal according to claim 4 or 5, wherein the black carbon is selected from at least one of rubber black carbon, cement mortar black carbon, pyrolysis black carbon, semi-reinforcing black carbon and special black carbon.

7. The refrigerant seal according to any one of claims 1 to 6, wherein a refrigerant is selected from any one of R744, R22, R32, R290, R404A, R410A, R134a, R142b and R407c.

8. The refrigerant seal according to any one of claims 1 to 7, wherein a temperature range of a refrigerant is -30 °C to +165 °C, and a pressure of the refrigerant is 1.3 to 34 Mpa; and
the refrigerant is selected from any one of R744 and R290.

9. The refrigerant seal according to any one of claims 1 to 8, wherein the refrigerant seal has at least one of following properties:
(a) tensile strength greater than or equal to 20.5 MPa;
(b) tear strength greater than or equal to 30 N/mm;
(c) refrigerant permeability less than or equal to 1.0×10⁻¹⁰ g/cm².s·atm·25°C; and
(d) leakage rate of the refrigerant seal less than or equal to 0.2 g/a.

10. A method for manufacturing a refrigerant seal, comprising:
providing an uncured rubber compound having an -OCF₃ bond and an uncured rubber compound having a -CH₂CH(CN)- bond; and
mixing the uncured rubber compound having the -OCF₃ bond and the uncured rubber compound having the -CH₂CH(CN)- bond in a machine, and vulcanizing;
wherein a weight ratio of the rubber compound having the -OCF₃ bond to the rubber compound having the -CH₂CH(CN)-bond ranges from 1:1 to 9:1.

11. The method according to claim 10, wherein said mixing the uncured rubber compound having the -OCF₃ bond and the uncured rubber compound having the - CH₂CH(CN)- bond in the machine comprises:
placing the uncured rubber compound having the -OCF₃ bond and the uncured rubber compound having the -CH₂CH(CN)- bond in an internal mixer, and setting an internal mixing initial temperature and a rotor speed of the internal mixer for mixing to form a mixed compound;
wherein the internal mixing initial temperature is 65 °C-75 °C, the rotor speed is 50r/min-70r/min, a mixing duration of the mixed compound is 5 min-15 min, and a rubber discharging temperature is less than or equal to 120 °C.

12. The method according to claim 11, wherein said mixing the uncured rubber compound having the -OCF₃ bond and the uncured rubber compound having the - CH₂CH(CN)- bond in the machine further comprises:
adding an auxiliary filler into the mixed compound for mixing;
wherein the auxiliary filler comprises at least one of black carbon, fibrous nanostructures, a crosslinking agent and a crosslinking aid.

13. The method according to any one of claims 10 to 12, wherein the vulcanizing process comprises first stage vulcanization and second stage vulcanization;
wherein conditions for the first stage vulcanization comprise: a vulcanization temperature of 155°C-165 °C, a vulcanization duration of 15-25 min, and a vulcanization pressure of 5-15 MPa; and
wherein conditions for the second stage vulcanization comprise: a vulcanization temperature of 150°C-230 °C, and a vulcanization duration of 3.5-4 h.

14. A thermal management assembly,
wherein the thermal management assembly comprises a functional device, a connector and a first seal, the functional device is sealingly connected to the first seal, and the connector is sealingly connected to the first seal; the functional device comprises at least one of a heat exchange device (1001, 1002), a compressor (2) and a throttling device (3); and the thermal management assembly is capable of circulating a refrigerant, the first seal comprises a rubber compound having an -OCF₃ bond and a rubber compound having a -CH₂CH(CN)- bond, and a weight ratio of the rubber compound having the -OCF₃ bond to the rubber compound having the -CH₂CH(CN)-bond ranges from 1:1 to 9:1; or
wherein the thermal management assembly comprises a first functional part, a second functional part and a second seal, the first functional part is sealingly connected to the second seal, and the second functional part is sealingly connected to the second seal; and the thermal management assembly is capable of circulating a refrigerant, the second seal comprises a rubber compound having an -OCF₃ bond and a rubber compound having a -CH₂CH(CN)-bond, and a weight ratio of the rubber compound having the -OCF₃ bond to the rubber compound having the -CH₂CH(CN)-bond ranges from 1:1 to 9:1.

15. A thermal management system, comprising:
a compressor (2),
a heat exchange device (1001, 1002);
a throttling device (3);
a connector; and
a seal,
wherein the thermal management system has a refrigerant flow path, the compressor (2), the heat exchange device (1001, 1002) and the throttling device (3) are provided in the refrigerant flow path, and the refrigerant flow path is configured to circulate a refrigerant;
wherein at least one of the compressor (2), the heat exchange device (1001, 1002) and the throttling device (3) is sealingly connected to the seal, and the connector is sealingly connected to the seal; and
the seal comprises a rubber compound having an -OCF₃ bond and a rubber compound having a -CH₂CH(CN)- bond, and a weight ratio of the rubber compound having the -OCF₃ bond to the rubber compound having the -CH₂CH(CN)-bond ranges from 1:1 to 9:1.
